Europäisches Patentamt

European Patent Office

Office européen des brevets

(11) Publication number: **0 350 558 B1**

(12) **EUROPEAN PATENT SPECIFICATION**

(45) Date of publication of patent specification: **30.12.92**　(51) Int. Cl.⁵: **A01K 1/12**

(21) Application number: **88830296.5**

(22) Date of filing: **11.07.88**

(54) **Milking device for cows and buffalo-cows with comb-like arrangement of the stations.**

(43) Date of publication of application:
**17.01.90 Bulletin  90/03**

(45) Publication of the grant of the patent:
**30.12.92 Bulletin  92/53**

(84) Designated Contracting States:
**DE FR GB IT NL SE**

(56) References cited:
**GB-A- 2 016 888**
**GB-A- 2 023 397**
**US-A- 3 810 442**
**US-A- 4 194 467**
**US-A- 4 513 687**

(73) Proprietor: **CERES SRL**
**Via Ciulli 60A**
**Prato (Firenze)(IT)**

(72) Inventor: **Francesco, Signor Fiamma**
**via Bensa 12**
**Prato Firenze(IT)**

(74) Representative: **Sassatelli, Franco T., Dr.**
**c/o INIP via Ruggi 5**
**I-40137 Bologna(IT)**

Rank Xerox (UK) Business Services

## Description

The invention refers to a new milking parlour for cows and buffalo-cows which principally realizes a better space plant use, allows a time reduction for entry and exit of the animals from the different stations and permits the separated exit of the animals from each station so to can exclude before milking those animals which must not be milked and, after the milking, to permit that all the animals went out together. Important present milking parlour characteristic is to foresee a modular component structure which derives the passage space for the animals into the same space of the stations. Further the invented milking parlour limits the space of said stations arranging the stations in series on the same line with their axes orthogonal compared to the milking ditch axis where are the milking fittings. Said "comb-like" arrangement permits to the operator to act standing in behind position compared to the animal and standing into the milking ditch.

In the milking parlour fundamental are the necessities to save plant space, to reduce the working times and for the operator to work from an easy position and however protect against the animal movements. These necessities have brought to realize plants which use separating structures to form milking stations into which the animals have access across a passage. An actual milking system said "herring-bone", as teaching in the U.S. Patent no. 4,194,467, foresees the side by side disposition of the animals for the milking with 45° inclination compared to milking ditch axis. In said system the animals reach in row and one by one arrange themself into the milking stations delimited by winding bars. If its is carried out the orthogonal projection of the animal overall dimension, arranged so inclined, it results an obstructed space of cm. 115 of the milking ditch border that compared to the side by side disposition of the animals as foreseen in the present milking system, which has an obstructed space of the milking ditch border of cm. 75, foresees in said "herring-bone" arrangement a space waste of cm. 40 for each animal. Moreover in the "herring-bone" arrangement the animals cannot go out one by one from the stations because the head animal arranges the row containing. Consequently the animals can go out only when all the milkings are ended. The invented system permits, further to the already said space saving, also to save the space normally used for the passage of the animals to the stations using a structure having a variable composition. The new milking parlour permits moreover a station space adjustment and it permits the frontal exit of the animals which can go out all at the same time, so to avoid the row disposition, or separately so to let out, before milking, those animals which for pregnancy, mastitis of other must not to be milked. Moreover working the operator from the milking ditch, he can work faster and in a milking position more confortable having a total protection from the animal. Another type of milking system is shown in US-A-4,513,687 which defines the features as outlined in the preamble of claim 1.

The present milking parlour foresees a "comb-like" arrangement of the stations 5 having a modular component structure which in a first position forms a passage 1 on the lateral border of a milking ditch 2. Said passage 1 is delimited on one side by a permanent screening barrier 3 supported by uprights located on the ditch border, and separating the ditch from the passage, and on the other side by movable barriers which in a second position form said "comb-like" stations 5. The movable barriers are on hinge 6 mounted intermediate their ends such that in the first position one end extends part-way across a first station whilst the other end extends part-way across an adjacent station and can hinge from the first position to the second position. Each movable barrier is animal activated between said first and second positions, whereby entry of an animal in the first station, moves the movable barrier from the first to the second position, thereby allowing a following animal to enter the adjacent station. The said other end of the movable barrier serving, in said second position, to prevent access along the passage to said first station, thus allowing sequential entry of an animal into each station.

In the present invention the milking parlour is characterised in that the separators 4 defining the stations 5 are orthogonally fitted on the lateral border of the milking ditch 2, the uprights supporting the permanent screening barrier 3 are the uprights of the separators 4. The movable barriers consist of undular sectors which are also supported by the uprights of the separators 4. The said other end 7 of each movable barrier partially overlaps said first end 8 of the preceding movable barrier.

Further objects of the invention are to permit defecation collecting of the animals when they are in milking position, the screening barrier 3 supports a mould 9 with lower collecting channel 10. To permit the operator protection when he stands in the milking ditch it is foreseen a beating bar 11 which limits the animal hind leg movements. In the present milking parlour the animals are let out frontally by drive opening of gates 12. This permits both the separated exit of the animals which have not to be milked as well as the exit of the animals already milked. By means of another drive said gates 12 are then closed again. Turning of 90° towards the interior, in a longitudinal sense, the space limiting device 13 which is articulated on hinges 14 of gate 12 is foreseen to change the station 5 length. To avoid the rotation in the opposite direction of the undular sector, forming the movable barrier, it is foreseen a retainer 15.

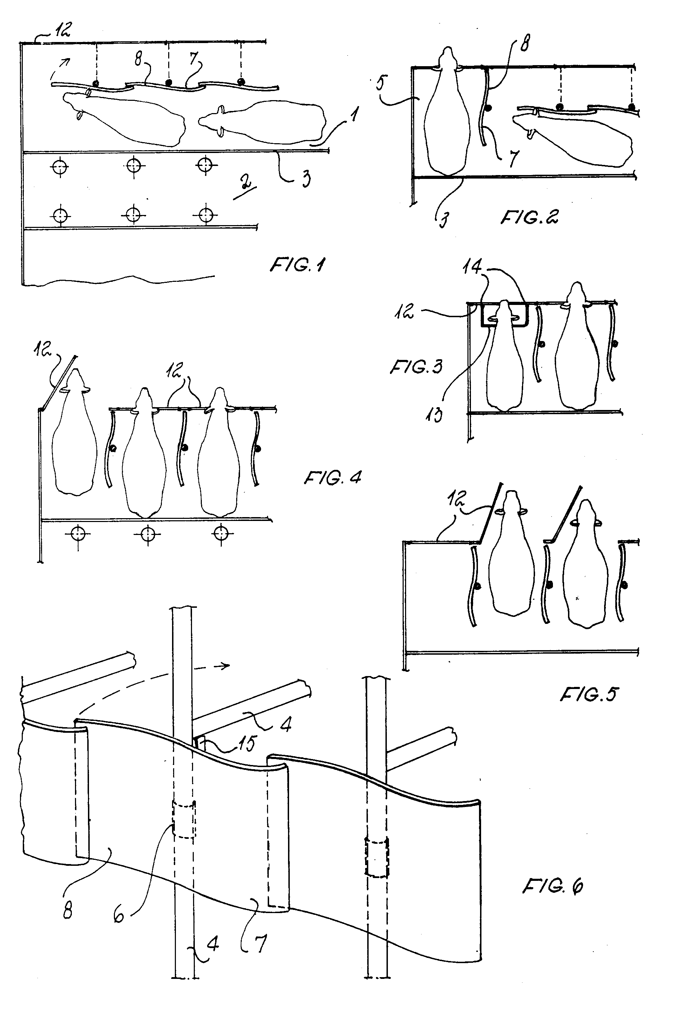

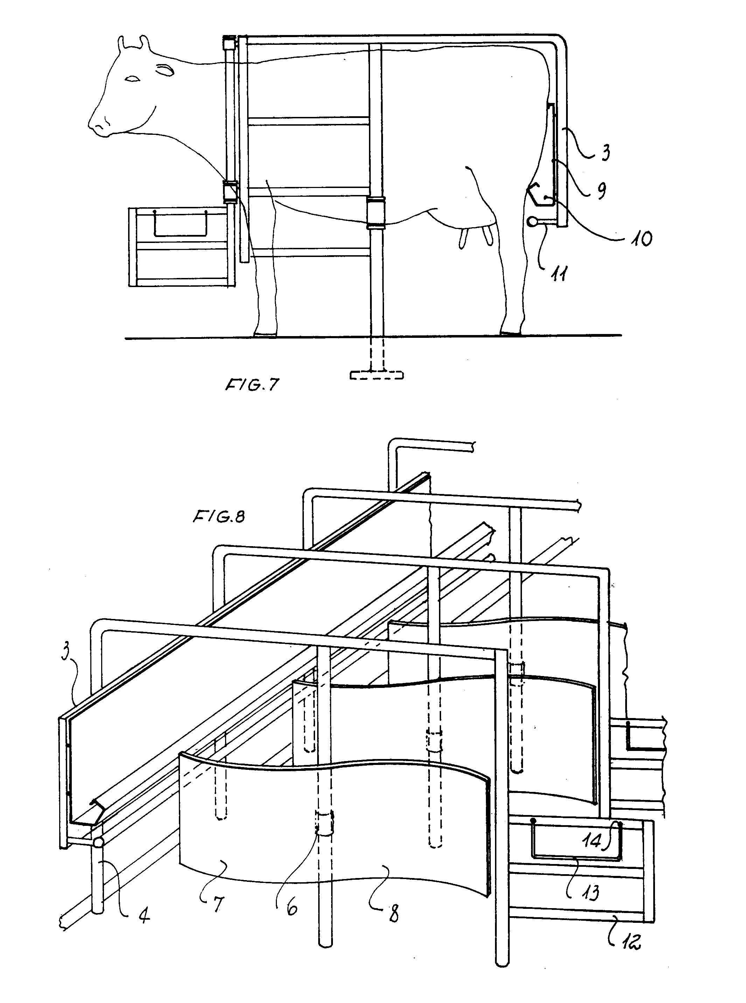

A preferred embodiment of the invention is illustrated in the drawings of sheets 1 and 2. In sheet 1 fig. 1 is view from above of the ahead animal, of the row of animals sets of into passage 1 which reaching into the last station 5 pushes the gate end 8 of the rotating undular sector so to make it placed on the separator 4 while its other end 7 closes the passage space integrated the same into the station and permitting the operativeness of the consecutive undular sector as in fig. 2. The retainer 15 prevents that a different animal movement making rotate the undular sector in counterclockwise way, stops the normal entering into the stations. Fig. 3 is view of two flanked stations in the first of which is used on gate 12 the space limiting device 13 is rotated inwards by 90° on hinges 14 and locking the same on catch to permit the station space adjustment for a shorter animal. Fig. 4 shows the system possibility to permit the frontal separated exit of the animals which must not be milked by opening only those gates 12 of the stations where are said animals, whereas the other ones stay closed. In fig. 5 the gate 12 from which is already gone out the animal is closed again while the other ones are opening to permit the frontal exit of the milked animals. Fig. 6 is perspective view to show the barrier formed by the rotating undular sectors acting on hinges 6 of the uprights of the separators 4. In sheet 2 fig. 7 is lateral view of the station with the animal still in milking position and with the gate 12 already opened. It is visible the screening barrier 3 of the passage 1 with permanent disposition on the border milking ditch 2 supported by the initial uprights of the separators 4 fixed into the floor which supports the wall mould 9 with lower collecting channel 10 of the animal defecation in milking position, while the beating bar 11 limits the posterior animal position. Said combined system permits both the total protection of the operator into milking station 16 that the station cleaning operating only on the channel 10. Fig. 8 is perspectiview of all the modular structure to show the permanent screening barrier 3 on the milking ditch 2 border supported by separators 4 of the stations 5.

In the realizations the stations can be on the two sides or on only one side of the milking ditch, also the station number can change. The present milking parlour can be equipped to be driven in automatic.

## Claims

1. Milking parlour for cows and buffalo-cows with a "comb-like" arrangement of the stations (5), having a modular component structure which in a first position forms a passage (1) on the lateral border of a milking ditch (2), said passage (1) is delimited on one side by a permanent screening barrier (3) supported by uprights located on the ditch border, and separating the ditch from the passage, and on the other side by movable barriers, which in a second position form said "comb-like" stations (5), said movable barriers are hinge (6) mounted intermediate their ends such that in the first position one end extends part-way across a first station whilst the other end extends part-way across an adjacent station and can hinge from the first position to the second position, each movable barrier is animal activated between said first and second positions, whereby entry of an animal in the first station, moves the movable barrier from the first to the second position, thereby allowing a following animal to enter the adjacent station, the said other end of the movable barrier serving, in said second position, to prevent access along the passage to said first station, thus allowing sequential entry of an animal into each station, characterized in that, separators (4) defining the stations (5) are orthogonally fitted on the lateral border of the milking ditch (2), the uprights supporting the permanent screening barrier (3) are the uprights of the separators (4), the movable barriers consist of undular sectors which are also supported by the uprights of the separators (4), the said other end (7) of each movable barrier partially overlaps said first end (8) of the preceding movable barrier.

2. The milking parlour of claim 1) wherein to permit defecation collecting of the animals when they are in milking position, the screening barrier (3) supports a mould (9) with lower collecting channel (10).

3. The milking parlour of claim 1) wherein to permit the operator protection when he stands in the milking ditch it is foreseen a beating bar (11) which limits the animal hind leg movements.

4. The milking parlour of claim 1) wherein the animals are let out frontally by drive opening of gates (12), this permitting both the separated exit of the animals which have not to be milked as well as the exit of the animals already milked, by means of another drive said gates (12) are then closed again.

5. The milking parlour of claim 1) wherein turning of 90° towards the interior, in a longitudinal sense, the space limiting device (13), which is articulated on hinges (14) of a gate (12) is foreseen to change the station (5) length.

**Patentansprüche**

1. Melkanlage für Kühe and Büffelkühe in Parallelmelkständen (5), derer Struktur aus Modulbestanteilen besteht und in einer ersten Stellung eine Bahn (1) auf dem Seitenrand der Melkgrube (2) bildet, welche Bahn (1) einerseits von einer schirmenden bleibenden Schranken (3), die von die Melkgrube von der Bahn trennenden Ständern der Melkgrube gestüzt wird, und anderseitsvon beweglichen Schranken, die in einer zweiten Stellung der Parallelmelkstan (5) bilden; diese beweglichen Schranken sind auf einem Gelenk (6) aufgebaut in einer Stellung, die mittens von ihren Endverschlussen liegt, so daß in der ersten Stellung ein Endverschluss dehnt sich durch die anliegende Anlage und kann von der ersten Stellung in die zweite Stellung drehen; jede bewegliche Schranke von der Kuh eingesezt, die sie von der ersten in die zweite dieser Stellungen bringt; wenn die Kuh in die erste Anlage hereinkommt, bewegt die Kuh die bewegliche Schranke vonder ersten Stellung in die zweite Stellung und ermöglicht die Kuh dadurch, daß die andere Kuh in die anliegende Anlage hereinkommen kann; der andere Endverschluss der beweglichen Schranke dient in der zweiten Stellung dazu, daß der Eingang an die erste Anlage der Bahn entlang versperrt ist, und das ermoglicht es, daß die Kuhen in einer Folge in jede Anlage hereinkommen; dadurch gekennzeichnet daß die Trenner (4), die Anlagen (5) begrenzen, sind senkrechtan dem Seitenrand der Melkgrube (2) verbunden, die die schirmende bleibende Schranke (3) stützenden Sändersind die Ständer der Trenner (4) die beweglichen Schranken bestehen aus welligen Abschnitten, die auch von den Ständern der Trenner (14) gestuzt werden,und der andere Endverschluss (7) jeder beweglichen Schranke überlagert teilweise den Endverschluss (8) der vorhergehenden beweglichen Schranke.

2. Melkanlage nach Anspruch 1) in der die schirmende Schranke (3) eine Schablone (9) mit unterer Sammlungsrinne (10) hat, um es zu ermogliechen, die Entleerungen der Kuhen zu sammeln, wenn sie gemelkt werden.

3. Melkanlage nach Anspruch 1) in der eine Flugelschranke (11) versehen ist, die die Bewegungen der Kuh beschrenkt, um den Arbeiter an der Anlage zu schutzen.

4. Melkanlage nach Anspurch 1) in der die Kuhen von vorne herauskommen, und das passiert durch eine Oeffnung mit Gitterchen (12); auf diese Weise wird der getrennte Ausgang der Tiere ermoglicht, sowohl derjenigen die schon gemelkt worden sind, als derjenigen, die noch gemelkt werden mussen; dadurch zwei verschiedene Antriebe konnen die Gitterchen (12) geoffnet oder geschlossen werden.

5. Melkanlage nach Anspruch 1) in der, indem man den Raumbeschrenkter (13), der auf Gelenken (14) eines Gitterchens (12) ist, zu 90° in Richtung der Innenseite der Maschie dreht, ist es moglich, die Länge der Anlage (5) zu verandern.

**Revendications**

1. Installation de traite pour des vaches et des bufflonnes dans des salles de traite parallèles (5) ayant une structure à composantes modulaires qui dans une première position forme un couloir (1) sur le bord latéral de la fosse de traite (2), ce couloir (1) est délimité d'un côté par une barrière-écran fixe (3), supportée par des montants situés sur la fosse de traite et séparant la fosse du couloir, et de l'autre côté de barrières mobiles qui dans une seconde position forment ces salles paralléles (5); ces barrières mobiles sont sur charnière (6) montée entre leurs deux extrémités de façon à ce que dans une première position la partie terminale de la barrière se déploie en partie à travers la salle adjacent et puisse tourner de la premiére position à la seconde, chaque barrière mobile est actionnée par l'animal que la fait passer de la première à la seconde de ces positions; au moment de l'entrée de l'animal dans la première salle celui ci fait passer la barrière mobile de la première à la seconde position ed question permettant à l'animal qui suit d'entrer dans la salle adjacente; l'autre partie terminale de la barrière mobile sert alors, dans cette seconde position, à empêcher l'accés le long due couloir à la première salle, celle ci permet l'entrée successive d'un animal dans chaque salle; caractérisé en ce que les séparateurs (4) limitants les salles (5) sont fixés orthogonalement sur le bord latéral de la fosse de traite (2), les montants qui soutiennent la barrière-écran fixe (3) sont les montants des séparateurs (4), les barrières mobiles sont des secteurs ondulaires qui sont eux aussi supportés par les montants des séparateurs (4), l'autre partie terminale (7) de chaque barriére mobile se superpose partiellement à la première partie terminale (8) de la barrière mobile qui précède.

2. Installation de traite selon la revendication 1), dans laquelle pour permettre le ramassage des défécations des animaux quand ceux ci sont en position de traite, la barrière-écran (3) soutient une structure (9) ayant en dessous une rigole de collecte (10).

3. Installation de traite selon la revendication 1), dans laquelle pour permettre la protection de l'agent quand il se trouve dans la fosse de traite il est prévu une barre-battant (11) qui limite les mouvements des membres postérieurs de l'animal.

4. Installation de traite selon la revendication 1), dans laquelle les animaux sortent de front par l'ouverture à commandes des barrières (12), permettant ainsi non seulement la sortie séparée des animaux qui ne doivent pas être traits mais aussi la sortie des animaux qui ont déjà été traits; grace à une autre commande ces barrières (12) sont à nouveau fermées.

5. Installation de traite selon la revendication 1), dans laquelle en renversant à 90° à l'intérieur, dans le sens longitudinal, le limiteur d'espacement (13) articulé sur la charnière (14) d'une barrière (12) il est possible de faire varier la longueur de la salle (5).

FIG.1

FIG.2

FIG.3

FIG.4

FIG.5

FIG.6

FIG.7

FIG.8